## Europäisches Patentamt
## European Patent Office
## Office européen des brevets

(19)

(11) Veröffentlichungsnummer : **0 146 495 B1**

(12) **EUROPÄISCHE PATENTSCHRIFT**

(45) Veröffentlichungstag der Patentschrift :
11.11.87

(21) Anmeldenummer : **84810415.4**

(22) Anmeldetag : **23.08.84**

(51) Int. Cl.⁴ : **A 45 B 11/00**, A 45 B 23/00

(54) **Halterungsteil.**

(30) Priorität : **25.08.83 CH 4638/83**

(43) Veröffentlichungstag der Anmeldung :
**26.06.85 Patentblatt 85/26**

(45) Bekanntmachung des Hinweises auf die Patenterteilung : **11.11.87 Patentblatt 87/46**

(84) Benannte Vertragsstaaten :
**AT BE DE FR GB IT LU NL SE**

(56) Entgegenhaltungen :
**DE-A- 2 602 657**
**DE-B- 2 246 260**
**GB-A- 11 893**

(73) Patentinhaber : **Herzog, Franz**
**Bergstrasse 6**
**CH-8280 Kreuzlingen (CH)**

(72) Erfinder : **Herzog, Franz**
**Bergstrasse 6**
**CH-8280 Kreuzlingen (CH)**

(74) Vertreter : **Werffeli, Heinz R., Dipl.-Ing.**
**Postfach 275 Waldgartenstrasse 12**
**CH-8125 Zürich-Zollikerberg (CH)**

EP 0 146 495 B1

## Beschreibung

Die Erfindung betrifft einen Halterungsteil zur lösbaren Halterung eines Stockes, insbesondere eines Sonnenschirm- oder Wäscheständerstockes, welcher Halterungsteil mit einem vertikal verlaufenden Führungsrohr versehen ist.

Ein derartiger Halterungsteil ist aus der DE-B-2 246 260 bekannt.

Beiden bekannten, für Sonnenschirmstöcke bestimmten Halterungsteile erfordert die mittels einer Klemmschraube zu erfolgende Festklemmung beim Klemmen wie beim Lösen oft einen für viele Benützer zu hohen Kraftaufwand und wackelt bei dünneren Stockquerschnitten der Stock im Halterungsteil, was lästig ist.

Aufgabe der vorliegenden Erfindung ist die Schaffung eines Halterungsteiles zur lösbaren Halterung eines Stockes, welche die obgenannten Nachteile nicht aufweist, und welcher Stöcke verschiedenen Durchmessers wackelfrei zu halten in der Lage ist.

Diese Aufgabe wird bei einem Halterungsteil der eingangs genannten Art erfindungsgemäss dadurch gelöst, dass im Bereich der Stockeinführseite des Führungsrohres in diesem ein quer zur Längsachse des letzteren federnd wirkender Anpressteil und im Bereich der Austrittsseite des Führungsrohres ein in Längsrichtung der Längsachse des letzteren sich erstreckender, von der Austrittsseite weg zunehmender keilförmiger Auflaufteil vorgesehen ist.

Es ist zweckmässig, wenn das Führungsrohr einen runden Oeffnungsquerschnitt aufweist.

Zur Erzielung einer einfachen Konstruktion ist es vorteilhaft, dass der Anpressteil aus einem schräg nach unten verlaufenden Federbügel besteht, an dessen freiem, gegen den festzuklemmenden Stock gerichtetem Endteil ein Elastikteil, zweckmässigerweise ein Gummiteil angeordnet ist.

Zur Erzielung einer einwandfreien Halterung von Stöcken verschiedenen Durchmessers ist es zweckmässig, wenn der Anpressteil und der keilförmige Auflaufteil derart bemessen sind, dass der Stock mit dem kleinsten noch festzuklemmenden Stockdurchmesser durch diese beiden Teile genügend festgeklemmt wird.

Um den Halterungsteil zum Beispiel auf der Innenseite der Balkonbrüstung befestigen zu können, ist es vorteilhaft, wenn das Führungsrohr, der Anpressteil und der Auflaufteil an einem gemeinsamen Befestigungsflansch angeordnet sind.

Weitere vorteilhafte Ausgestaltungen sind den Unteransprüchen zu entnehmen.

Nachstehend wird die Erfindung anhand der Zeichnung beispielsweise erläutert. Es zeigt :

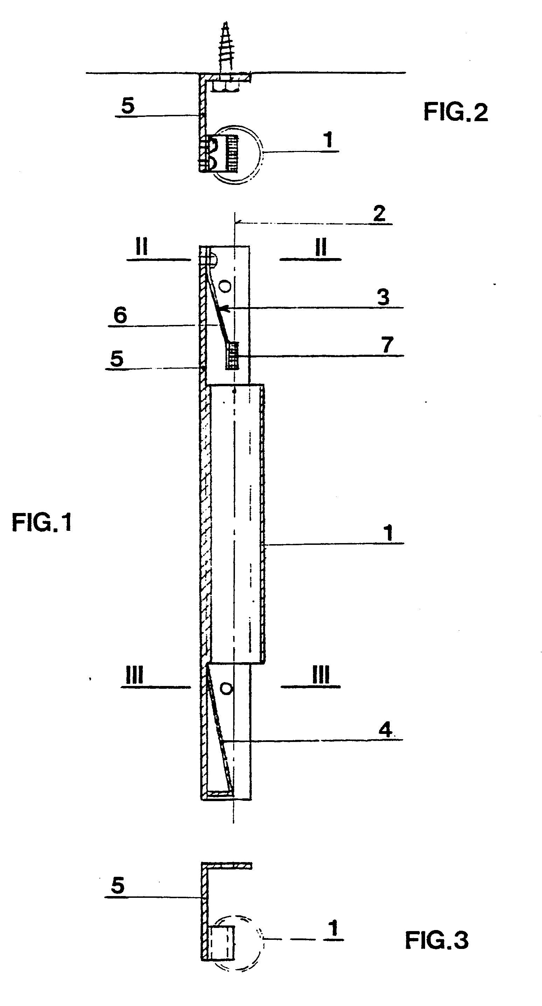

Fig. 1 einen Längsschnitt durch eine beispielsweise Ausführungsform eines erfindungsgemässen Halterungsteiles ;

Fig. 2 einen Schnitt längs der Linie II-II in Fig. 1

Fig. 3 einen Schnitt längs der Linie III-III in Fig. 1.

Wie aus der Zeichnung ersichtlich, ist der dargestellte Halterungsteil zur lösbaren Halterung eines Sonnenschirmstockes mit einem vertikal verlaufenden Führungsrohr 1 zur Aufnahme des Sonnenschirmstockes versehen, wobei das Führungsrohr 1 einen runden Oeffnungsquerschnitt aufweist.

Auf der Einführseite des Führungsrohres 1 ist ein quer zur Längsachse 2 des letzteren federnd wirkender Anpressteil 3 und auf der Austrittsseite des Führungsrohres 1 ein in Längsrichtung der Längsachse 2 des letzteren sich erstreckender keilförmiger Auflaufteil 4 zur Festklemmung des unteren Endes des zu halternden Stockes vorgesehen, wobei alle diese Teile an einem gemeinsamen Befestigungsflansch 5 angeordnet sind, welcher seinerseits mittels Schrauben zum Beispiel auf der Innenseite einer Balkonbrüstung, einer Veranda, eines Sitzplatzes oder dergleichen befestigt werden kann.

Der Anpressbügel 3 besteht aus einem schräg nach unten verlaufenden Federbügel 6, an dessen freiem, gegen den festzuklemmenden Stock gerichteten Endteil ein Gummiteil 7 angeordnet ist, welcher ein Drehen des Schirmes in der Halterung verhindert.

Der Anpressteil 3 und der keilförmige Auflaufteil 4 erstrecken sich soweit gegen die Längsachse 2 zu, dass der Stock mit dem kleinsten noch festzuklemmenden Stockdurchmesser durch diese beiden Teile 3 und 4 zusammen mit dem Führungsrohr 1 genügend festgeklemmt wird.

Anderseits muss der Anpressteil 3 genügend weit von der Längsachse 2 weg bewegt werden können, dass auch der Stock mit dem grössten noch festzuklemmenden Durchmesser ohne Schwierigkeiten in das Führungsrohr 1 hineingeschoben werden kann.

Selbstverständlich kann diese Halterung auch wie die bisherigen Halterungen in einem transportablen Standsockel angeordnet werden, um den Standplatz des Sonnenschirms verändern zu können.

An Stelle eines Sonnenschirmes kann z. B. auch der Stock eines Wäscheständers mittels dieser Halterung gehalten werden.

Zur einwandfreien Halterung des eingeführten Stockes sind der Anpressteil 3 und der keilförmige Auflaufteil 4 derart angeordnet und/oder ausgebildet, dass die den in den Halterungsteil eingeführten Stock in gleicher Richtung seitlich, an die Innenseite des Führungsrohres 1 anpressen.

## Patentansprüche

1. Halterungsteil zur lösbaren Halterung eines Stockes, insbesondere eines Sonnenschirm- oder Wäscheständerstockes, welcher Halterungsteil mit einem vertikal verlaufenden Führungsrohr (1) versehen ist, dadurch gekennzeichnet, dass im Bereich der Stockeinführseite des Führungsrohres (1) in diesem ein quer zur Längsachse (2) des letzteren federnd wirkender Anpressteil (3) und im Bereich der Austrittsseite des Führungsrohres (1) ein in Längsrichtung der Längsachse (2) des letzteren sich erstreckender, von der Austrittsseite weg zunehmender keilförmiger Auflaufteil (4) vorgesehen ist.

2. Halterungsteil nach Anspruch 1, dadurch gekennzeichnet, dass das Führungsrohr (1) einen runden Oeffnungsquerschnitt aufweist.

3. Halterungsteil nach einem der Ansprüche 1 oder 2, dadurch gekennzeichnet, dass der Anpressteil (3) aus einem schräg nach unten verlaufenden Federbügel (6) besteht, an dessen freiem, gegen den festzuklemmenden Stock gerichtetem Endteil ein Elastikteil, zweckmässigerweise ein Gummiteil (7), angeordnet ist.

4. Halterungsteil nach einem der Ansprüche 1 bis 3, dadurch gekennzeichnet, dass der Anpressteil (3) und der keilförmige Auflaufteil (4) derart bemessen sind, dass der Stock mit dem kleinsten noch festzuklemmenden Stockdurchmesser durch diese beiden Teile (3, 4) genügend festgeklemmt wird.

5. Halterungsteil nach einem der Ansprüche 1 bis 4, dadurch gekennzeichnet, dass das Führungsrohr (1), der Anpressteil (3) und der Auflaufteil (4) an einem gemeinsamen Befestigungsflansch (5) angeordnet sind.

6. Halterungsteil nach einem der Ansprüche 1 bis 4, dadurch gekennzeichnet, dass er in einem transportablen Standsockel angeordnet ist.

7. Halterungsteil nach einem der Ansprüche 1 bis 6, dadurch gekennzeichnet, dass der Anpressteil (3) und der keilförmige Auflaufteil (4) derart angeordnet und/oder ausgebildet sind, dass sie einen in den Halterungsteil eingeführten Stock in gleicher Richtung seitlich an die Innenseite des Führungsrohres (1) andrücken.

## Claims

1. A holding member for detachably holding a pole, more particularly a parasol or washing line pole, which holding member is provided with a vertically extending guide tube (1), characterised in that in the region of the pole insertion end of the guide tube (1) therein a contact member (3) is provided which acts resiliently transverse to the longitudinal axis (2) of the said tube and in the region of the outlet end of the guide tube (1) a wedge shaped abutment element (4) is provided, which increases away from the outlet end and extends in the longitudinal direction of the longitudinal axis (2) of the said tube.

2. A holding member according to claim 1, characterised in that the guide tube (1) has a round opening section.

3. A holding member according to either of claims 1 or 2, characterised in that the abutment element (3) comprises a diagonally downward extending spring clip (6), a resilient element, preferably a rubber element (7), being disposed on the free end part thereof which is orientated towards the pole to be clamped.

4. A holding member according to any one of claims 1 to 3, characterised in that the contact member (3) and the wedge shaped abutment element (4) are dimensioned so that the pole is adequately clamped with the smallest possible pole diameter by both these parts (3, 4).

5. A holding member according to any one of claims 1 to 4, characterised in that the guide tube (1), the contact member (3) and the abutment element (4) are mounted on a common fastening flange (5).

6. A holding member according to any one of claims 1 to 4, characterised in that it is arranged in the transportable base stand.

7. A holding member according to any one of claims 1 to 6, characterised in that the contact member (3) and the wedge shaped abutment element (4) are disposed and/or designed so that they force a pole introduced into the holding part in the same direction laterally against the inside of the guide tube (1).

## Revendications

1. Pièce de maintien conçue pour maintenir d'une manière amovible une tige, notamment un manche de parasol ou un support vertical de séchoir à linge et comportant un tube de guidage vertical (1), caractérisée en ce que, du côté de l'entrée de la tige, le tube de guidage (1) comporte une pièce (3) qui exerce une poussée élastique dirigée transversalement par rapport à l'axe longitudinal (2) du tube et que, du côté de la sortie, le tube de guidage (1) comporte une pièce d'accostage (4) en forme de coin qui s'étend dans le sens de l'axe longitudinal (2) et dont l'épaisseur augmente en s'écartant du côté de la sortie.

2. Pièce de maintien selon la revendication 1, caractérisée en ce que le tube de guidage (1) a une ouverture de section ronde.

3. Pièce de maintien selon l'une des revendications 1 ou 2, caractérisée en ce que la pièce (3) qui exerce la poussée est un étrier élastique (6) qui se dirige obliquement vers le bas et porte, à son extrémité libre tournée vers la tige à serrer, une pièce élastique (7), de préférence en caoutchouc.

4. Pièce de maintien selon l'une des revendications 1 à 3, caractérisée en ce que les dimensions de la pièce (3) qui exerce la poussée et de la pièce d'accostage (4) en forme de coin soient telles que celle des tiges à serrer qui a le plus petit diamètre soit suffisamment serrée par ces deux pièces (3, 4).

5. Pièce de maintien selon l'une des revendications 1 à 4, caractérisée en ce que le tube de guidage (1), la pièce (3) qui exerce la pression et la pièce d'accostage (4) sont montés sur une bride de fixation commune (5).

6. Pièce de maintien selon l'une des revendications 1 à 4, caractérisée en ce qu'elle est montée sur un socle transportable.

7. Pièce de maintien selon l'une des revendications 1 à 6, caractérisée en ce que la pièce (3) qui exerce la poussée et la pièce d'accostage (4) en forme de coin sont placées et/ou réalisées de telle manière qu'elles poussent la tige engagée dans la pièce de maintien latéralement dans la même direction contre le tube de guidage (1).

0 146 495

FIG.2

5

1

2

II    II

3

6

7

5

FIG.1

1

III    III

4

5

1

FIG.3

1